Europäisches Patentamt

European Patent Office

Office européen des brevets

(11) Publication number: **0 132 370**
**B1**

## EUROPEAN PATENT SPECIFICATION

(45) Date of publication of patent specification: 29.03.89    (51) Int. Cl.⁴: **G 01 N 21/59**

(21) Application number: **84304868.7**

(22) Date of filing: **17.07.84**

(54) Apparatus for measuring optical transmission factor.

(30) Priority: **22.07.83 JP 132692/83**
**22.07.83 JP 132691/83**

(43) Date of publication of application:
**30.01.85 Bulletin 85/05**

(45) Publication of the grant of the patent:
**29.03.89 Bulletin 89/13**

(84) Designated Contracting States:
**DE FR GB NL**

(56) References cited:
**DE-A-2 460 434**
**DE-B-1 914 655**
**US-A-3 390 605**
**US-A-3 677 621**
**US-A-4 017 193**

**PATENT ABSTRACTS OF JAPAN, vol. 8, no.**
**215, 2nd October 1984, page (P-305) (1652); &**
**JP-A-59-99333 (OKI DENKI) 08-06-1984**

(73) Proprietor: **Oki Electric Industry Company,**
**Limited**
**7-12, Toranomon 1-chome Minato-ku**
**Tokyo 105 (JP)**

(72) Inventor: **Tokumaru, Syokichi**
**OKI ELECTRIC IND. CO.LTD 7-12 Toranomon**
**1-chome**
**Minato-ku Tokyo (JP)**

(74) Representative: **George, Sidney Arthur et al**
**GILL JENNINGS & EVERY 53-64 Chancery Lane**
**London WC2A 1HN (GB)**

## Description

This invention relates to apparatus for measuring optical transmission factor and, in particular, relates to such apparatus which has no moving mechanical parts. The invention uses the particular structure of an optical beam splitter. The invention may be applied, for instance, to a smoke indicator, a dust concentration indicator, or a gas combustion control.

The basic method of measuring the optical transmission factor is to use a light source and a light detector. If the strength of the light is $I_0$, and the strength of that light whe the light has passed through an object which absorbs some of the light energy is $I$, the transmission factor $t$ of that object is defined as $t=I/I_0$.

However, the direct application of that basic method is not preferable, since it is subject to measurement error due to the presence of dirt and/or dust on a window of the measurement apparatus.

DE—A—2460434 describes an apparatus for measuring optical transmission factor, comprising a pair of units located at opposite sides of an object the transmission factor of which is to be measured, each unit comprising means for generating a light beam having a predetermined restricted wavelength band, the light beams of the two units being generated alternately; a first beam splitter which passes a first light beam to the object, and offsets a second light beam; a second beam splitter which combines into a single common beam the offset beam from the first beam splitter and a beam from the other unit after passage through the object; and a photo-detector to receive the combined common beam to provide an electrical signal relating to the intensity of the common beam. The apparatus also includes re-entrant windows at opposite sides of the object to be measured and the second beam is directed via mirrors through facing portions of the re-entrant windows. On one transit of the re-entrant windows it passes through a common point with the first beam but on the other transit it passes through a different part of the re-entrant window. In this way, some account is taken of measurement error due to the accummulation of dirt or debris on the window. However a full allowance is not made and, in particular no allowance can be made for any differential build-up of dirt or debris on the re-entrant window.

US—A—3677621 discloses a beam splitting prism for use as an optical field flattening device comprising two right angled prisms with a dielectric multi-layer stack sandwiched between their hypotenuse faces. Quarter wave plates and concave mirrors are located on adjacent faces of the two prisms so that light entering one face of one of the prisms is split into two components having different polarisation states at the dielectric multi-layer stack and these components are reflected at their respective concave mirrors and, because of the quarter-wave plates, recombined to leave from the one face of the other prism. The curvature of the field is varied by varying the degree of curvature of the concave mirrors.

According to this invention such an apparatus for measuring the optical transmission factor is characterised in that each of the beam splitters comprises a beam splitting prism which splits a light beam into components of different polarisation state and which has a first pair of confronting planes for input and output of an optical beam, a second pair of confronting planes, a polarisation film located along a diagonal plane of the beam splitting prism, and a mirror surface on one of the second confronting planes for internal reflection of the optical beam; the beam splitting prism being arranged so components split from a single beam share a substantially common point on the output plane of the prism and are emitted in mutually orthogonal directions; and in that one of the first confronting planes of each of the beam splitting prisms is exposed to the object.

Embodiments of the invention will now be described, and contrasted with another example with reference to the accompanying drawings wherein:

Fig. 1 shows the structure of a prior optical transmission factor measuring apparatus;

Fig. 2 shows another structure of a prior measuring apparatus;

Fig. 3 shows the structure of one form of beam splitter for use in the present invention;

Fig. 4 shows the operation of the beam splitter of Fig. 3 in a transmission factor measuring apparatus according to the present invention;

Fig. 5 shows schematically the structure of a measuring apparatus according to the present invention;

Fig. 6 shows the time sequence of illumination of the light sources of Fig. 5;

Fig. 7 shows a modified form of beam splitter for use in the present invention; and

Fig. 8 shows characteristic curves of a beam splitter.

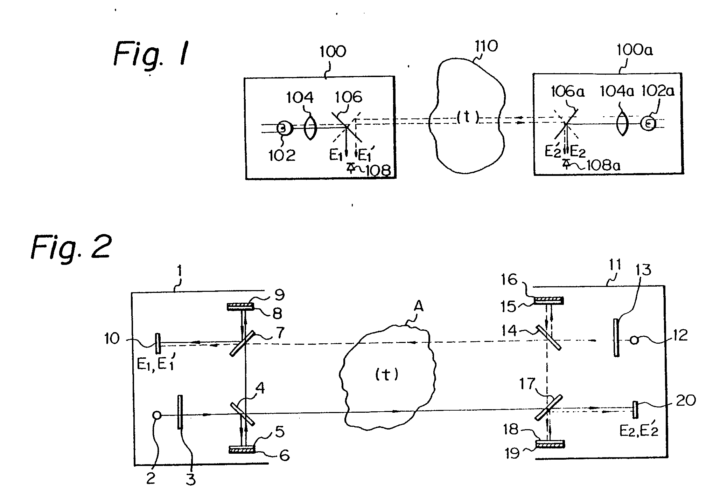

An example of an apparatus for measuring the optical transmission factor is shown in our previous Japanese patent application No. 208550/82 JP—A—59 039333, published on 08.06.84) which is not part of the state of the art, and in Figs. 1 and 2 of the accompanying drawings. In Fig. 1, the apparatus comprises measuring apparatus units 100 and 100a, lamps 102 and 102a, lenses 104 and 104a, rotatable mirrors 106 and 106a, and optical detectors 108 and 108a. The apparatus is used for measuring the transmission factor (t) of an object 110. When the mirrors 106 and 106a are in the positions indicated by the solid lines, the light from the lamp 102 is reflected by the mirror 106, and is applied to the detector 108, which provides an output voltage $E_1$. Similarly, the light from the lamp 102a is reflected by the mirror 106a, and is applied to the detector 108a, which provides the output voltage $E_2$, $E_1$ and $E_2$ are expressed as follows.

$$E_1 = I_1 m_1 g_1$$
$$E_2 = I_2 m_2 g_2$$

where $I_1$ and $I_2$ are values showing the strength of the light of the lamps 102 and 102a, respectively, $m_1$ and $m_2$ are constants relating to the characteristics of the mirror 106 and 106a, respectively, and $g_1$ and $g_2$ are constants defined by the sensitivity of the detectors 108 and 108a, respectively.

Similarly, when the mirror 106 is in the position indicated by the dotted line, and the mirror 106a is in a position which does not obstruct the light beam, the light from the lamp 102a passes through the object 110 which has a transmission factor (t), is reflected by the mirror 106, and is detected by the detector 108, which provides an output voltage $E_1'$. Similarly, when the mirror 106a at the dotted line position, and the other mirror 106 does not obstruct the beam from the lamp 102, the light beam from the lamp 102 passes through the object 110, is reflected by the mirror 106a, and is detected by the detector 108a, which provides an output voltage $E_2'$. The values $E_1'$ and $E_2'$ are shown below.

$$E_1' = I_2(t)m_1g_1$$
$$E_2' = I_1(t)m_2g_2$$

When the following ratio is calculated, the transmission factor (5) is obtained.

$$\sqrt{E_1'E_2'/(E_1E_2)} = \sqrt{(I_2(t)m_1g_1I_1(t)m_2g_2)/(I_1m_1g_1I_2m_2g_2)} = (t)$$

Since the values $E_1$, $E_2$, $E_1'$ and $E_2'$ are not measured at the same time, those values are measured on a time division basis according to the rotation of the mirrors.

However, the apparatus of Fig. 1 has the disadvantage that the mirrors must rotate, and the moving mirrors decrease the operational reliability of the apparatus.

Fig. 2 shows an improvement of the apparatus of Fig. 1. The prior apparatus of Fig. 2 uses a fixed polarisation beam splitter, instead of a rotatable mirror.

In Fig. 2, the apparatus comprises measuring apparatus units 1 and 11, and an object A is located between the units 1 and 11. The units 1 and 11 have light sources 2 and 12, respectively, interference filters 3 and 13, first polarisation beam splitters 4 and 14, first quarter-wavelength plates 5 and 15, first reflection mirrors 6 and 16, second polarisation beam splitters 7 and 17, second quarter-wavelength plates 8 and 18, second reflection mirrors 9 and 19, and photo-detectors 10 and 20, respectively. The light sources 2 and 12 are tungsten lamps or light emitting diodes, and are controlled so that the lamps 2 and 12 provide a light output alternately. Accordingly, when the lamp 2 is bright, the lamp 12 is dark. The light beam from the lamp 2 is applied to the interference filter 3, which restricts the range of the wavelength. Then the beam is applied to the first beam splitter 4, in which the S polarisation component is reflected, and the P polarisation component passes through and is applied to the object A.

It should be appreciated that the S polarisation component is reflected by the beam splitter, and the P polarisation component passes through the beam splitter in the description of the present specification.

When the input beam is a circular polarisation beam, the strength of the P polarisation component is the same as that of the S polarisation component. The reflected S polarisation component passes through the first quarter wavelength plate 5, is reflected by the first reflection mirror 6, and passes again through the first quarter wavelength plate 5 which converts the polarisation to the P polarisation. The beam is then applied again to the first polarisation beam splitter 4 and passes through it, and is applied to the second polarisation beam splitter 7 and passes through it. The beam then reaches the second reflection mirror 9 through the second quarter wavelength plate 8, and is reflected by that mirror. The reflected beam passes again through the second quarter wavelength plate 8, and is converted to an S polarisation beam. The converted S polarisation beam is reflected by the second polarisation beam splitter 7, and is applied to the photodetector 10 which converts the optical power to an electrical signal $E_1$. On the other hand, the P polarisation beam which passes through the beam splitter 4 is applied to the second polarisation beam splitter 17 through the object A, passes through that beam splitter, and is then applied to the photo-detector 20, which provides an output voltage $E_2'$.

When the light source 2 is dark, the light source 12 is bright. The light beam from the light source 12 is applied to the detectors 10 and 20, after passing along the dotted paths, and it is assumed that the detectors 10 and 20 provide output signals, $E_1'$ and $E_2$, respectively. The transmission factor (t) of the object (A) is obtained by calculation from the following equation.

$$(t) = \sqrt{(E_1'E_2')/E_1E_2)} \tag{1}$$

The structure of Figs. 1 and 2 has the advantage that the effect of dirt and/or dust on a mirror or a polarisation beam splitter is automatically compensated for.

However, a polarisation beam splitter which is a flat plate as shown in Fig. 2 with a polarisation film has the disadvantage that the ratio of the reflected beam to the passed beam plus the reflected beam of the P polarisation component cannot be small enough, and, the calculated transmission factor is therefore not accurate. The small ratio of the reflected beam to the passed beam plus the reflected beam of that polarisation beam splitter comes from the narrow bandwidth from the P component transfer wavelength in the S component transfer wavelength of the characteristic curve of wavelength against transmissivity. That is to say, only the beam applied to a polarisation film of a splitter with the Brewster angle is separated well enough.

The theoretical analysis when the ratio is small, that is to say, when a part of the S component passes through the beam splitter, and/or when a part of the P component reflects, is described below.

It is assumed in Fig. 2 that all of the beam splitters 4, 7, 14 and 17 have the same characteristics as one another, and that the leakage of each beam splitter is 10%. That is to say, it is assumed that 10% of the S component passes through the beam splitter, and 10% of the P component is reflected by the beam splitter, although the leakage is zero in an ideal beam splitter.

Regarding the light beam generated by the light source 2, the 90% of the P component passes through the beam splitter 4, the output of which is applied to the beam splitter 17 through the object A. The beam splitter 17 also passes 90% of the input beam, and the output of the beam splitter 17 is applied to the detector 20, which provides the electrical signal

$$E_1' = 0.81(t)(=0.9 \times (t) \times 0.9).$$

The first leakage of that P component is the 10% of the P component which is reflected to the beam splitter 4. That first leakage beam is applied to the photo-detector 10, via the quarter wavelength plate 5, the mirror 6, the quarter wavelength plate 5, the beam splitter 4 (the P component is converted to the S component in passing the quarter wavelength plate 5, and the converted S component passes through the beam splitter 4), the beam splitter 7, the quarter wavelength plate 8, the mirror 9, the quarter wavelength plate 8, and the beam splitter 7 (the converted S component is converted again to the P component by the quarter wavelength plate 8, so the re-converted P component is reflected by the beam splitter 7). However, the amount of the leakage in that path is very small, and can be neglected in the analysis.

The second leakage of the P component is the 10% of the P component reflected by the beam splitter 17. The second leakage beam is also applied to the detector 10, via the beam splitter 4, the object A, the beam splitter 17(10%), the beam splitter 14, the object A, and the beam splitter 7. The electrical signal resulting from that second leakage is

$$0.008(t^2) \ (=0.9 \times (t) \times 0.1 \times (t) \times 0.9),$$

and that signal is added to the value $E_1$.

On the other hand, regarding the S component which provides the signal $E_1$ in the detector 10, the normal optical path is via the beam splitter 4 (90%), the quarter wavelength plate 5, the mirror 6, the quarter wavelength plate 5, the beam splitter 4 (90%), the beam splitter 7 (90%), the quarter wavelength plate 8, the mirror 9, the quarter wavelength plate 8, the beam splitter 7 (90%). Therefore, the signal $E_1$ is

$$0.66(=0.9 \times 0.9 \times 0.9 \times 0.9).$$

The first leakage of that S component is caused by the beam splitter 4 which passes 10% of the S component. The 10% of the leaked S component is fed, via the object A, the beam splitter 17 (which reflects the S component), the beam splitter 14 (which also reflects the S component), the object A, and the beam splitter 7, to the detector 10. The signal due to that leakage path of the S component is

$$0.008(t^2)(=0.1 \times (t) \times 0.9 \times 0.9 \times (t) \times 0.1),$$

and that is added to the signal $E_1$.

The second leakage of the S component is the reflection by the beam splitter 7. However, the amount of the second leakage is small, and can be neglected in the present analysis.

The third leakage of the S component is via the path through the beam splitter 4, the object A, the beam splitter 17, to the detector 20, which provides a signal

$$0.01(t)(=0.1 \times (t) \times 0.1).$$

That signal is added to the signal $E_1'$.

Accordingly, the levels $E_1$ and $E_1'$ taking into account the leakage is shown below.

$$E_1 = 0.66 + 0.008(t^2) + 0.008(t^2) = 0.66 + 0.016(t^2)$$
$$E_1' = 0.81(t) + 0.01(t) = 0.82(t)$$

A similar error occurs relating to the beam generated by the light source 12 as follows.

$$E_2 = 0.66 + 0.016(t^2)$$
$$E_2' = 0.82(t)$$

Accordingly, equation (1) is calculated as follows..

$$\sqrt{(E_1'E_2')/(E_1E_2)}=0.82(t)/(0.66+0.016(t_2))$$

When t=1, that value is:

$$\sqrt{(E_1'E_2')/(E_1E_2)}=1.21$$

It should be appreciated that that value should be 1.0. Therefore, a 21% error has occurred due to the leakage of the optical beam by the beam splitters.

It is an object, therefore, of the present invention to overcome the disadvantages and limitations of the prior apparatus by providing a new and improved apparatus for measuring optical transmission factor.

It is also an object of the present invention to provide an optical transmission factor mesauring apparatus, which is not affected by dirt, does not have mechanically moving means, and provides an accurate measured value.

According to the invention there is provided an apparatus as set out in claim 1.

Embodiments of the invention will now be described, by way of example with reference to the accompanying drawings wherein:

Fig. 1 shows the structure of a prior optical transmission factor measuring apparatus as described above;

Fig. 2 shows another structure of a prior measuring apparatus as described above;

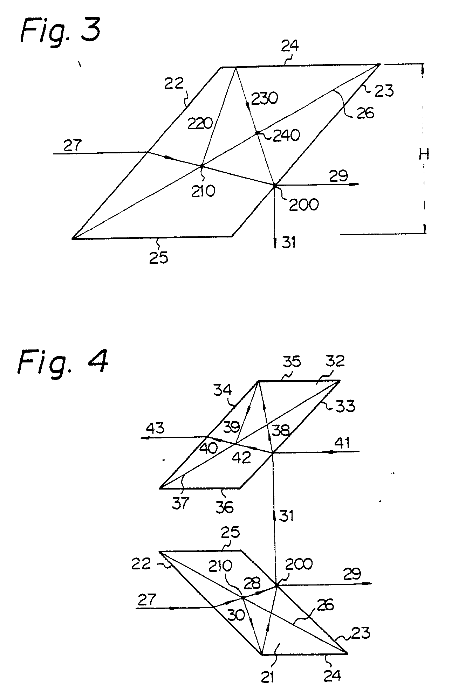

Fig. 3 shows the structure of one form of beam splitter for use in the present invention;

Fig. 4 shows the operation of the beam splitter of Fig. 3 in a transmission factor measuring apparatus according to the present invention;

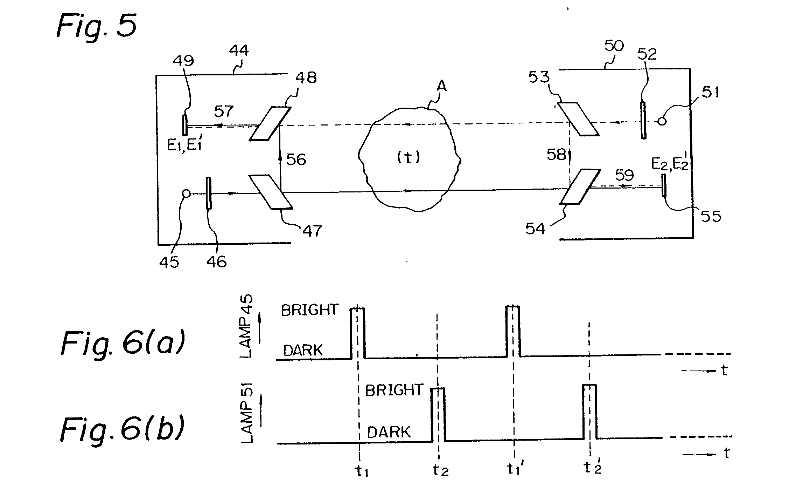

Fig. 5 shows schematically the structure of a measuring apparatus according to the present invention;

Fig. 6 shows the time sequence of illumination of the light sources of Fig. 5;

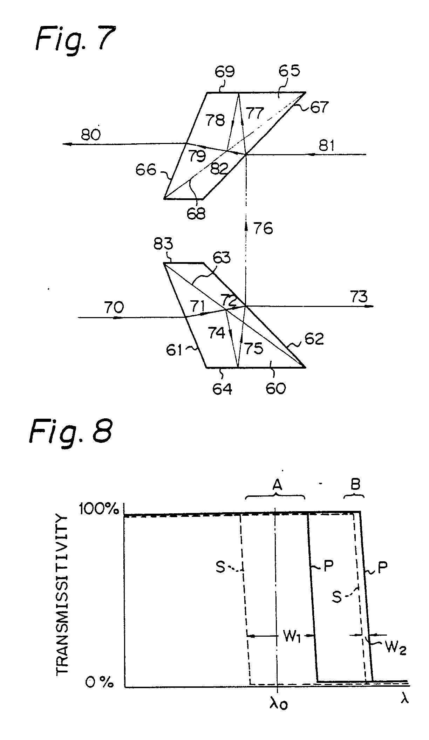

Fig. 7 shows a modified form of beam splitter for use in the present invention; and

Fig. 8 shows characteristic curves of a beam splitter.

Fig. 3 of the drawings shows the cross section of one form of polarisation beam splitter for use in the present invention. The beam splitter is in the shape of a parallelogram having mutually parallel planes 22 and 23 and mutually parallel planes 24 and 25. The length of the beam splitter in the direction perpendicular to the drawing is substantially the same as the height H of the parallelogram. A reflective film is provided inside the plane 24. A polarisation film 26 is provided along the diagonal plane of the parallelogram.

It is assumed that an input beam 27 which is a circular polarisation beam is applied to the plant 22 so that the beam 27 is parallel to the plane 25 (or the plane 24), then, the beam 27 is refracted at the plane 22, due to the difference of the refraction index between the material of the beam splitter and air space, then, the beam is applied to the point 210 on the polarisation film 26. The P polarization component of the beam passes through the polarization film 26, and goes out of the beam splitter at the point 200 on the plane 23. The output beam 29 generated at the point 200 is parallel with the input beam 27. On the other hand, the S polarization component at the point 210 is reflected by the polarization film 26, then, the reflected beam is applied to the mirror surface of the plane 24 through the path 220. The mirror surface of the plane 24 reflects the input beam, and the reflected beam is applied again to the polarization film 26 through the path 230. The beam along the path 230 is applied to the point 240 on the polarization film 26, and said beam passes the film 26, but is not reflected by that film 26. The reason why the S polarization component is reflected at the point 210, while that S polarization component passes through the film at the point 240, is due to the angle of incidence. The incidence angle at the first point 210 is selected to be close to the Brewster angle, and the incidence angle at the point 240 is smaller or almost perpendicular as shown in the Figure. The beam passing through the polarization film 26 at the point 240 is applied to the plane 23, then, goes out of the beam splitter along the path 31. The output beam 29 is perpendicular to the output beam 31.

Further, the parallelogramic beam splitter and the input point of the beam is designed so that the output point 200 on the plane 23 for the first P polarization beam which passes through the polarization film 26 coincides with the output point for the second S polarization beam. That is to say, both the P polarization beam which passes through the polarization film and the S polarization beam which is reflected by the polarization film passes the common point 200 on the output plane 23, while the output beam 29, is perpendicular to the output base 31.

The reason why the S polarization component is reflected at the point 210, while the S component passes the film at the point 240 is described in accordance with Fig. 8, which shows the characteristics of a base splitter. In Fig. 8, the horizontal axis shows the wavelength of a beam, and the vertical axis shows the transmissivity (transmission factor) of a beam splitter. The transmissivity 100% means that an input beam passes through the beam splitter, and the transmissivity 0% means that the input beam is reflected by the beam splitter. The solid lines in the Figure show the characteristics of the P polarization component, and the dotted lines show the S polarization component.

It should be noted in Fig. 8 that the transfer wavelength in whcih the P component changes the transmissivity from 100% to 0% is longer than the transfer wavelength in which the S component changes the transmissivity from 100% to 0%, and that the transfer wavelength of both the P component and the S component shifts to the longer wavelength when the angle of incidence is small. In Fig. 8, the symbol A shows the case when the angle of incidence is close to the Brewster angle, and the symbol B shows the case when the angle of incidence is small. Further, it should be noted in Fig. 8 that the wavelength band $W_1$ in case of Brewster angle is wider than the wavelength band $W_2$ in case of small incidence angle. The Brewster angle is defined by the structure of a beam splitter (glass and polarization film).

Accordingly, a beam splitter is usually used so that the angle of incidence is close to the Brewster angle, and the wavelength of the input beam is ($\lambda_0$) which is the center of the wavelength band $W_1$.

In Fig. 3, it is supposed that the angle of incidence at the point 210 is close to the Brewster angle, or at least, the bandwidth $W_1$ between the P component transfer wavelength and the S component transfer wavelength is sufficiently wide, and the wavelength of the input beam is close to the center of that wavelength band. Accordingly, the P component passes through the point 210, and the S component is reflected at that point 210. On the other hand, at the point 240 where the S component which is reflected by the mirror surface of the plane 24 is applied, the angle of incidence of the input beam is small, and therefore, the transfer wavelength of the S component is longer than the wavelength of the input beam, as shown in the symbol B of Fig. 8. Accordingly, both the S component and the P component with the wavelength ($\lambda_0$) passes through the point 240.

The typical design of a beam splitter which has the feature of Fig. 3 is as follows.

The refraction index of a splitter body (glass); 1.684

The angle between the plane 25 and the film 26; 24°48'

The angle between the plane 24 and the film 26; 24°48'

The angle between the plane 22 and the film 26; 22°12'

The angle between the plane 23 and the film 26; 22°12'

Fig. 4 shows the combination of a pair of polarization beam splitters each of which has the structure of Fig. 3. In Fig. 4, the first beam splitter 21 separates the input beam 27 into the P polarization output beam 29, and the S polarization output beam 31 which is perpendicular to said P output beam 29. The second beam splitter 32 combines a pair of input beams 31 and 41 and provides a common output beam 43.

The first beam splitter 21 has a pair of parallel planes 22 and 23, and 24 and 25. The polarization film (dielectric film) 26 is located along the diagonal plane of the parallelogram, and the reflection error is provided inside of the plane 24.

The input beam 27, which may be either a circular polarization beam, or a linear polarization beam with 45° relating to upright line, is applied to the plane 22, then, is separated to P polarization component and S polarization component by the polarization film 26. The P component passes through the polarization film 26, goes along the path 28, and output as the beam 29. The output beam 29 is parallel to the input beam 27. The S polarization beam separated from the input beam 27 is reflected by the polarization film 26, goes along the path 30, then, is reflected by the mirror surface 24 and is applied again to the polarization film 26. As the angle of incidence at this time is small, the beam reflected by the mirror surface 24 passes through the polarization film 26, and becomes the output beam 31 which is perpendicular to another output beam 29.

It is assumed of course that the angle of incidence of the input beam applied the polarization film 26 is close to the Brewster angle which is defined by the structure and the material of the beam splitter, or at least said angle of incidence is within 5° from the Brewster angle.

The second beam splitter 32 has the same structure as that of the first one 21. The plane 33 is parallel with the plane 34, and the plane 35 is parallel with the plane 36. The polarization film 37 is provided along the diagonal plane of the parallelogram. The second beam splitter 32 is located so that the plane 36 is parallel with the plane 25, and the plane 33 faces with the plane 23.

The path of the beam in the second beam splitter 32 is opposite to that of the first beam splitter 21. The input beam 31 to the second beam splitter 32 is applied to the plane 33 from the first beam splitter 21, and said beam 31 goes along the path 38, passes through the polarization film 37, is reflected by the mirror surface 35, and returns to the polarization film 37 along the path 39. The beam along the path 39 is reflected by the polarization film 37 because of the incidence angle close to the Brewster angle, and becomes the output beam 43 through the path 40. The input beam 41 (P component) to the plane 33 passes through the polarization film 37 through the path 42, and joins the output beam 43 through the path 40. It should be appreciated that both the input beams 31 and 41 provide the single common output beam 43, due to the particular structure of the beam splitter, and the particular location of the input beams.

Fig. 5 shows the structure of the measuring apparatus of the optical transmission factor according to the present invention. In the Figure, the first unit 44 has the completely same structure as the second unit 50, and the object A which the optical transmission factor is subject to be measured is positioned between the units 44 and 50. The unit 44 (50) has a light source 45 (51), an interference filter 46 (52), a first polarization beam splitter 47 (53), a second polarization beam splitter 48 (54), and a photo-detector 49 (55). The light source 45 (or 51) may be a tungsten lamp, a light emission diode, or a laser diode. The light sources 45 and 51 provide an optical beam alternately as shown in Fig. 6. That is to say, when the first light source 45 is bright, the second light source 51 is dark.

The beam from the light source 45 is applied to the interference filter 46, which restricts the wavelength band (when a laser diode is used as a light source, the interference filter 46 may be removed, as the wavelength band of a laser beam is inherently narrow). Thus, the beam of the light source 45 is applied to the polarization beam splitter 47 through the interference filter 46. When the input beam is a circular polarization, the S component is reflected by the beam splitter 47 to the path 56, and is applied to the beam splitter 48, then, is applied to the photo-detector 49 through the reflection by the beam splitter 48. The electrical output signal of those path is $E_1$. On the other hand, the P component passes through the beam splitter 47, and is applied to the object A, which attenuates the beam according to the optical transmission factor of the object A. Then, the beam is applied to the beam splitter 54 located at the other side, and is applied to the photo-detector 55 through the path 59. The electrical signal thus obtained is $E_2'$.

Next, at time $t_2$ when the light source 45 is dark, and the light source 51 is bright, the beam of the light source 51 goes along the dotted lines in the Figure, and provides the electrical signals $E_2$ at the detector 55, and $E_1'$ at the detector 49.

The above operation is repeated as the light sources 45 and 51 turn ON, and turn OFF.

The optical transmission factor of the object is obtained as follows.

$$(t)=\sqrt{(E_1'E_2')/(E_1E_2)}$$

It should be appreciated that according to the present invention a beam splitter compensates the soil or dust on a beam splitter itself, since a pair of beams 29 and 31 (or 31 and 41) share the common point on a beam splitter.

The other embodiment of the present invention is shown in Fig. 7, which provides the measurement of transmission factor of liquid, although the previous embodiment of Fig. 4 is applicable only to the measurement of air and/or gas.

In Fig. 7, a pair of beam splitters 60 and 65 are shown. The first beam splitter 60 separates an input beam 70 to a pair of perpendicular output beams 73 and 76, and the second beam splitter 65 combines a pair of perpendicular input beams 76 and 81 to a single common output beam 80.

The feasture of the embodiment of Fig. 7 in comparing the same with Fig. 4, is that the plane 61 (or 66) is not parallel to the plane 62 (or 67) in Fig. 7. The numerals 63 and 68 in Fig. 7 are polarization film (dielectric film) located along the diagonal plane of the body. The plane 64 and 69 have a mirror surface inside of the plane, as is the case of Fig. 4.

The input beam 70 applied to the polarization film 63 through the path 71 is separated to the P component and the S component. The P component which passes through the polarization film 63 is applied to an object (not shown) thorugh the paths 72 and 73. The S component which is reflected by the polarization film 63 provides the output beam 80 through the paths 74, 75, 76, 77, 78, and 79. The input beam 81 applied to the beam splitter 65 joins the output beam 80 through the paths 82 and 79.

It should be appreciated in Fig. 7 that the planes 61 and 66 contact with air, and the planes 62 and 67 contact with liquid.

The typical design of the beam splitter in the embodiment of Fig. 7 in case that an object is water is as follows.

The refractive index of a splitter body (glass): 1.684
The angle between plane 61 and polarization film 63; 29°44'
The angle between plane 83 and polarization film 63; 33°57'
The angle between plane 62 and polarization film 63; 11°03'
The angle between plane 64 and polarization film 63; 33°57'

As described above in detail, according to the present invention, a transmission factor is measured accurately even when an apparatus is soiled, by using no mechanical moving means. Since the separation ratio of a beam splitter is improved, the accuracy is considerably improved. Further, the measurement of not only air or gas, but also liquid is possible.

## Claims

1. Apparatus for measuring optical transmission factor, comprising a pair of units (44, 50) located at opposite sides of an object (A) the transmission factor of which is to be measured, each unit comprising means (45, 46; 51, 52) for generating a light beam having a predetermined restricted wavelength band, the light beams of the two units being generated alternately; a first beam splitter (47, 53) which passes a first light beam to the object, and offsets a second light beam; a second beam splitter (48, 53) which combines into a single common beam the offset beam from the first beam splitter and a beam from the other unit after passage through the object; and a photo-detector (49, 55) to receive the combined common beam to provide an electrical signal relating to the intensity of the common beam; characterised in that each of the beam splitters comprises a beam splitting prism (47, 48, 53, 54) which splits a light beam into components of different polarisation state and which has a first pair of confronting planes (22, 23) for input and output of an optical beam, a second pair of confronting planes (24, 25), a polarisation film (26) located along a diagonal plane of the beam splitting prism, and a mirror surface on one (24) of the second confronting planes (24, 25) for internal reflection of the optical beam; the beam splitting prism (47, 48, 53, 54) being arranged so that components (29, 31) split from a single beam (27) share a substantially common point (200) on the output plane (23) of the prism and are emitted in mutually orthogonal directions and in that one of the first confronting planes (23) of each of the beam splitting prisms (47, 48, 53, 54) is exposed to the object (A).

2. Apparatus according to claim 1, characterised in that each of the beam splitters (47, 48, 53, 54) is positioned so that an input beam is applied to the polarisation film (26) of the beam splitter at substantially the Brewster angle which is defined by the beam splitter.

3. Apparatus according to claim 2, characterised in that the difference between the angle of incidence of an input beam to the polarisation film (26) and the Brewster angle is less than 5 degrees.

4. Apparatus according to any preceding claim, characterised in that each beam splitter (47, 48, 53, 54) is of parallelogram shape.

5. Apparatus according to claim 4, characterised in that each beam splitter (47, 48, 53, 54) is made of glass with a refraction index of 1.684, and the angles between the planes and the polarisation film (26) are 24°48', and 22°12'.

6. Apparatus according to any one of claims 1—3, characterised in that the beam splitter is made of glass of refraction index 1.684; in that the angles between the polarisation film (63, 68) and the first pair of confronting planes are 29°44' and 11°03'; in that the angle between the polarisation film and each of the second pair of planes is 33°57'; and in that one of the first confronting planes makes contact with a liquid which is the object to be measured.

## Patentansprüche

1. Apparat zur Messung des optischen Transmissionsfaktors, mit einem Paar Einheiten (44, 50), die auf sich gegenüberliegenden Seiten eines Objekts (A) angeordnet sind, dessen Transmissionsfaktor gemessen werden soll, wobei jede Einheit Mittel (45, 46; 51, 52) zum Erzeugen eines Lichtstrahlenbündels mit einem vorbestimmten begrenzten Wellenlängenbereich aufweist und die Lichtstrahlenbündel der beiden Einheiten abwechselnd erzeugt werden; mit einem ersten Strahlenteiler (47, 53), der ein erstes Lichtstrahlenbündel zum Objekt durchläßt und ein zweites Lichtstrahlenbündel umlenkt; einem zweiten Strahlenteiler (48, 53), der das von ersten Strahlenteiler umgelenkte Strahlenbündel mit einem Strahlenbündel von der anderen Einheit nach Durchgang durch das Objekt vereinigt; und mit einem Fotodetektor (48, 55), der das vereinigte gemeinsame Strahlenbündel empfängt und ein elektrisches Signal erzeugt, das von der Intensität des gemeinsamen Strahlenbündels abhängt, dadurch gekennzeichnet, daß jeder der Strahlenteiler ein Strahlenteilungsprisma (47, 48, 53, 54) aufweist, das ein Lichtstrahlenbündel in Komponenten mit verschiedenem Polarisationszustand aufteilt und ein erstes Paar einander zugekehrter Ebenen (22, 23) zur Eingabe und Ausgabe eines optischen Strahlenbündels, ein zweites Paar einander zugekehrter Ebenen (24, 25), einen Polarisationsfilm (26), der längs einer diagonalen Ebene des Strahlenteilungsprismas angeordnet ist, und eine Spiegelfläche auf einer (24) der zweiten einander zugekehrten Ebenen (24, 25) zur internen Reflexion des optischen Strahlenbündels aufweist; daß das Strahlenteilungsprisma (47, 48, 53, 54) so ausgebildet ist, daß Komponenten (29, 31), die aus einem einzigen Strahlenbündel (27) abgeteilt worden sind, sich in einem im wesentlichen gemeinsamen Punkt (200) auf der Ausgangsebene (23) des Prismas treffen und in zueinander senkrechten Richtungen austreten und daß die eine der ersten einander zugekehrten Ebenen (23) jedes Strahlenteilungsprismas (47, 48, 53, 54) dem Objekt (A) zugekehrt ist.

2. Apparat nach Anspruch 1, dadurch gekennzeichnet, daß jeder der Strahlenteiler (47, 48, 53, 54) so angeordnet ist, daß ein Eingangsstrahl dem Polarisationsfilm (26) des Strahlenteilers im wesentlichen unter dem Brewster-Winkel, der durch den Strahlenteiler begrenzt ist, zugeführt wird.

3. Apparat nach Anspruch 2, dadurch gekennzeichnet, daß die Differenz zwischen dem Einfallswinkel eines Eingangsstrahls zum Polarisationsfilm (26) und dem Brewster-Winkel kleiner als 5° ist.

4. Apparat nach irgendeinem vorstehenden Anspruch, dadurch gekennzeichnet, daß jeder Strahlenteiler (47, 48, 53, 54) Parallelogrammform aufweist.

5. Apparat nach Anspruch 4, dadurch gekennzeichnet, daß jeder Strahlenteiler (47, 48, 53, 54) aus Glas mit einem Brechungsindex von 1,684 hergestellt ist und die Winkel zwischen den Ebenen und dem Polarisationsfilm (26) 24°48' und 22°12' betragen.

6. Apparat nach irgendeinem der Ansprüche 1 bis 3, dadurch gekennzeichnet, daß der Strahlenteiler aus Glas mit einem Brechungsindex von 1,684 hergestellt ist, daß die Winkel zwischen dem Polarisationsfilm (63, 68) und dem ersten Paar einander zugekehrter Ebenen 29°44' und 11°03' betragen, daß der Winkel zwischen dem Polarisationsfilm und jeder Ebene des zweiten Ebenen-Paares 33°57' beträgt und daß die eine der ersten einander zugekehrten Ebenen eine Flüssigkeit berührt, die das Meßobjekt bildet.

## Revendications

1. Un appareil pour mesurer le facteur de transmission optique, comprenant une paire d'unités (44, 50) placées sur les faces opposées d'un objet (A) dont le facteur de transmission doit être mesuré, chaque unité comprenant des dispositifs (45, 46; 51, 52) pour engendrer un faisceau lumineux ayant une bande de longueur d'onde restreinte prédéterminée, les faisceaux lumineux des deux unités étant engendrés en alternance; un premier séparateur de faisceau (47, 53) qui transmet un premier faisceau lumineux à l'objet, et décale un second faisceau lumineux; un second séparateur de faisceau (48, 53) qui combine en un faisceau commun unique, le faisceau décalé provenant du premier séparateur de faisceau et un faisceau provenant de l'autre unité après passage à travers l'objet; et un photo-détecteur (49, 55) pour recevoir le faisceau commun combiné et fournir un signal électrique se rapportant à l'intensité du faisceau commun; caractérisé par le fait que chacun des séparateurs de faisceau comprend un prisme de séparation du faisceau (47, 48; 53, 54) qui sépare un faisceau lumineux en composantes de polarisation différente, et qui est doté d'une première paire de plans face à face (22, 23) pour l'entrée et la sortie d'un faisceau optique, d'une seconde paire de plans face à face (24, 25), d'un film de polarisation (26) placé le long d'un plan diagonal du prisme de séparation du faisceau, et une surface de miroir (24) sur l'un des plans face à face (24, 25) pour la réflection interne du faisceau optique; le prisme de séparation du faisceau (47, 48, 53, 54) étant conçu de telle sorte que les composantes (29, 31) séparée à partir d'un faisceau unique (27) partagent un point sensiblement commun (200) sur le plan de sortie (23) du prisme, et sont émises dans des directions mutuellement orthogonales, et par le fait que l'un des premiers plans face à face (23) de chacun des prismes séparateurs de faisceaux (47, 48, 53, 54) est orienté vers l'objet (A).

2. Un appareil selon la revendication 1, caractérisé par le fait que chacun des séparateurs de faisceau (47, 48, 53, 54) est positionné de telle sorte que le faisceau d'entrée soit applique au film de polarisation (26) du séparateur de faisceau sensiblement suivant l'angle de Brewster, qui est défini par le séparateur de faisceau.

3. Un appareil selon la revendication 2, caractérisé par le fait que la différence entre l'angle d'incidence du faisceau d'entrée par rapport au film de polarisation (26) et l'angle de Brewster, est inférieure à 5 degrés.

4. Un appareil selon n'importe laquelle des revendications précédentes, caractérisé par le fait que chaque séparateur de faisceau (47, 48, 53, 54) a la forme d'un parallèlogramme.

5. Un appareil selon la revendication 4, caractérisé par le fait que chaque séparateur de faisceau (47, 48, 53, 54) est constitué par du verre, avec un index de réfraction de 1,684, et les angles entre les plans et le film de polarisation (26) sont de 24°48' et 22°12'.

6. Un appareil selon n'importe laquelle des revendications 1 à 3, caractérisé par le fait que le séparateur de faisceau est constitué de verre ayant un index de réfraction de 1,684, par le fait que les angles entre le film de polarisation (63, 68) et la première paire de plans face à face sont de 29°44' et 11°03'; par le fait que l'angle entre le film de polarisation et chacun des plans de la seconde paire de plans est de 33°57'; et par le fait que l'un des premiers plans face à face est en contact avec un liquide, qui constitue l'objet devant être mesuré.

*Fig. 1*

*Fig. 2*

*Fig. 3*

*Fig. 4*

EP 0 132 370 B1

*Fig. 5*

*Fig. 6(a)*

*Fig. 6(b)*

## Fig. 7

## Fig. 8

4